# EUROPÄISCHE PATENTSCHRIFT

(11) **EP 3 071 497 B1**
(45) Veröffentlichungstag und Bekanntmachung des Hinweises auf die Patenterteilung: **15.05.2019**
(21) Anmeldenummer: 14793513.4
(22) Anmeldetag: 31.10.2014
(51) Int. Cl.: B65G 23/22, B65G 15/50

(54) **TRANSPORTEUR FÜR BEHÄLTER**
CONVEYOR FOR CONTAINERS
TRANSPORTEUR DE RÉCIPIENTS

(30) Priorität: 20.11.2013 DE 102013112833
(43) Veröffentlichungstag der Anmeldung: 28.09.2016
(73) Patentinhaber: KHS GmbH, 44143 Dortmund (DE)
(72) Erfinder: BACKHAUS, Martin, 59423 Unna (DE); PAROTH, Berthold, 44289 Dortmund (DE)
(86) Internationale Anmeldenummer: PCT/EP2014/073430
(87) Internationale Veröffentlichungsnummer: WO 2015/074850

(56) Entgegenhaltungen:
- EP-A1- 2 272 320
- WO-A1-2004/039706
- DE-A1-102006 004 421
- DE-A1-102006 039 086
- DE-U1-202005 013 125
- US-B1- 7 287 640

## Beschreibung

Die Erfindung bezieht sich auf einen Transporteur gemäß Oberbegriff Patentanspruch 1.

Vorrichtungen oder Transporteure zum Transportieren von Transportgut in Form von Verpackungseinheiten, Behältern und/oder Gebinden sind in zahlreichen Ausführungen bekannt und werden insbesondere in Anlagen der Getränkeindustrie dazu verwendet, um Behälter von einer Behandlungsstation zu einer in Transportrichtung der Behälter anschließenden Behandlungsstation zu transportieren. Bekannt sind hierbei insbesondere auch Transporteure mit mehrzügigen Förder- oder Transportbändern, d.h. mit mehreren senkrecht zu einer Transportrichtung aneinander anschließenden und beispielsweise eine gemeinsame Transportfläche bildenden Transportbändern, wobei diese Transporteure unterschiedliche Funktionen haben können, beispielsweise zum Umformen eines einspurigen Behälterstroms in einen mehrspurigen Behälterstrom oder zum Verdichten oder Auseinanderführen eines Behälterstroms. Bekannt ist hierbei auch, derartige Transporteure mit mehrzügigen Förder- oder Transportbändern zum Drehen von Behältern, Verpackungseinheiten oder Gebinden, beispielsweise Kartons zu verwenden (DE 40 09 517 A1, DE 101 45 542 A1).

Bei den bekannten Transporteuren, bei denen die Transportelemente oder Transportbänder senkrecht zu einer Transportrichtung einander benachbart eine gemeinsame, beispielsweise horizontale Transportfläche bilden und die damit zum Transportieren von Behältern geeignet sind, ist es üblich, jeweils mehrere Transportbänder von einer gemeinsamen Antriebseinheit mit einem einzigen Antriebsmotor über eine gemeinsame Welle anzutreiben, so dass für diese Transportbänder dieselbe Transportgeschwindigkeit erreicht wird. Sind mehrere unterschiedliche Transportgeschwindigkeiten für in Transportrichtung aneinander anschließende Transportbänder erforderlich, ist es notwendig, mehrere Antriebseinheiten vorzusehen, wobei jede Antriebseinheit wiederum einen einzigen Antriebmotor aufweist, der über wenigstens eine Antriebswelle mehrere Transportbänder antreibt. Allein schon durch die Antriebswellen und deren Lagerung sind bekannte Transporteure konstruktiv aufwendig und teuer und erfordern einen erhöhten Wartungsaufwand, beispielsweise zum Schmieren der Lager für die Antriebswellen usw.

Bekannt ist weiterhin (DE 10 2006 004 421 A1, DE 20 2012 005 380 U1), elektrische Antriebe für Förder- oder Transportbänder durch motorisch betriebene Förderrollen oder durch Trommelmotoren zu realisieren, die als Außenläufermotoren mit einem inneren, drehfest mit einem Maschinengestell zu verbindenden Stator und mit einem äußeren Rotor ausgeführt sind, welch letzterer eine das jeweilige Transportband antreibende Umlenkung bildet. Die im Zusammenhang mit diesen bekannten Antrieben beschriebenen Transporteure sind aber keine mit mehreren Transportelementen, die mehrzügig und senkrecht zu einer Transportrichtung einander benachbart eine gemeinsame Transportebene für Behälter bilden.

Bekannt ist auch (WO 2007/006324 A1) bei Transporteuren zum Transportieren von Behältern das jeweils endlos umlaufend von einem Antriebsmotor antreibbare Transportelemente als Scharnierbandkette auszubilden.

Bekannt ist ferner ein Transporteur für elektrische Leiterplatten (US 6 032 788 A) mit zwei senkrecht zu der Transportrichtung voneinander beabstandeten und jeweils eine geschlossene Schlaufe bildenden Transportriemen, die von jeweils einem eigenen Antriebsmotor umlaufend angetrieben werden. Während des Transportes liegen die Leiterplatten mit zwei einander gegenüberliegenden Randbereichen auf jeweils auf einem Transportriemen auf. Für einen Transport von Behältern ist dieser bekannte Transporteur weder bestimmt, noch geeignet.

Aus dem Dokument DE 20 2005 013 125 U1 ist eine Transportvorrichtung nach dem Oberbegriff des Anspruchs 1 bekannt. Die von dieser Schrift vorgestellte Transportvorrichtung weist eine, mit mehreren nebeneinander angeordneten, eine Transportfläche für die Behälter bildenden Transportelementen, wobei die Transportelemente jeweils durch einen eigenen Antriebsmotor angetrieben werden. Mehr im Detail sieht diese Schrift jedoch lediglich die Verwendung von üblichen Elektromotoren mit feststehendem Gehäuse und umlaufender Antriebswelle und nicht die Verwendung von Außenläufer vor, was zur Folge hat, dass die Antriebsmotoren seitlich neben der Transportfläche montiert werden müssen, was dazu führt, dass die Transportvorrichtung sehr breit ausgebildet wird. Weiterhin sind die Antriebsmotoren nicht im Umlenkpunkt der Transportvorrichtung angeordnet, was dazu führt, dass Transportvorrichtung und Antriebsmotor jeweils nur durch einen sehr kleinen Umschlingungswinkel mit einander verbunden sind.

Aufgabe der Erfindung ist es, einen Transporteur aufzuzeigen, die die vorgenannten Nachteile vermeiden und bei hoher Betriebssicherheit eine erhebliche Reduzierung des Aufwandes in konstruktiver Hinsicht ermöglicht. Zur Lösung dieser Aufgabe ist ein Transporteur entsprechend dem Patentanspruch 1 ausgebildet.

Durch die Erfindung werden die Komplexität sowie der konstruktive Aufwand eines Transporteurs wesentlich reduziert. Es entfallen insbesondere Antriebswellen und deren Lagerungen sowie bei Ausbildung der elektrischen Antriebe als Außenläufermotoren auch gesonderte den Antrieb der Förderelemente bewirkende Umlenkungen.

Eine Besonderheit der Erfindung besteht darin, dass für jedes Transportelement ein eigenständiger Antriebsmotor vorgesehen ist. Dieser Motor ist ein Außenläufermotor, d.h. ein Motor mit einem außenliegenden Rotor, der bevorzugt von dem äußeren Motorgehäuse gebildet ist. Der Antriebsmotor bildet dann in vorteilhafter Weise unmittelbar die Umlenkung für das jeweilige Transportelement, d.h. die das Transportelement antreibende Umlenkung und die Lager des Motors sind zugleich die Lager dieser Umlenkung.

Die Förder- oder Transportelemente sind beispielsweise die bei Transporteuren üblichen Förder- oder Transportriemen, -gurte- oder -ketten, beispielsweise Scharnierbandketten.

"Behälter" sind im Sinne der Erfindung insbesondere Dosen, Flaschen, Tuben, Pourches, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind. "Verpackungseinheiten" sind im Sinne der Erfindung insbesondere derartige mit einem Produkt gefüllte Behälter.

"Quer zur Transportrichtung mehrzügig angeordnete Transportbänder" oder "quer zur Transportrichtung mehrzügig angeordnete Transportelemente" bedeutet im Sinne der Erfindung eine Anordnung der Transportbänder oder Transportelemente in der Weise, dass sie quer oder senkrecht zu einer Transportrichtung einander benachbart zumindest mit einem Teil ihrer jeweils oberen Schlaufenlänge eine gemeinsame, beispielsweise horizontale Transportfläche für das Transportgut bilden.

Der Ausdruck "im Wesentlichen" bzw. "etwa" bzw. "ca." bedeutet im Sinne der Erfindung Abweichungen vom jeweils exakten Wert um +/- 10%, bevorzugt um +/-5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Ausführungsbeispiele von Transporteure werden im Folgenden anhand der Figuren näher erläutert. Es zeigen:
Fig. 1 und 2 in schematischer Darstellung einen Transporteur gemäß der Erfindung in Draufsicht sowie in Seitenansicht;
Fig. 3 in Teildarstellung eine Unteransicht des Transporteurs der Figuren 1 und 2 im Bereich der Antriebseinheit für die Transportbänder;
Fig. 4 in schematischer Darstellung einen der mit seinem Stator auf einer Achse drehfest angeordneten Antriebsmotoren der Antriebseinheit des Transporteurs der Figuren 1 und 2;
Fig. 5 und 6 in Darstellungen ähnlich den Figuren 1 und 2 eine weitere Ausführungsform des erfindungsgemäßen Transporteurs;
Fig. 7 eine Unteransicht des Transporteurs der Figuren 5 und 6 im Bereich der Antriebseinheit für die Transportbänder;
Fig. 8 eine Darstellung ähnlich Figur 3 bei einer Ausführungsform nicht gemäß der Erfindung;
Fig. 9 und 10 in schematischer Darstellung in Draufsicht sowie in Seitenansicht eine weitere Ausführungsform nicht gemäß der Erfindung.

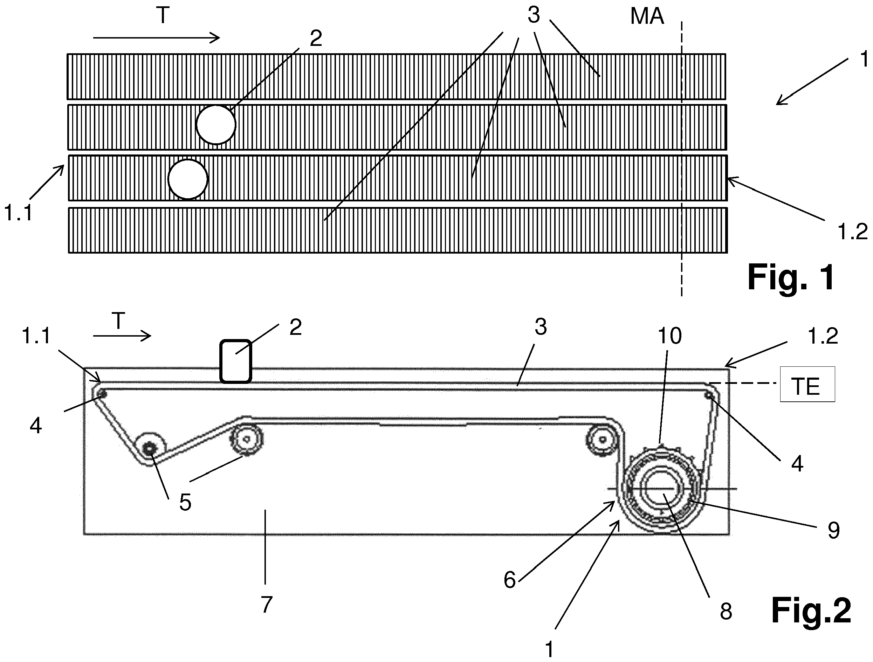

Der in den Figuren 1 - 3 allgemein mit 1 bezeichnete Transporteur dient zum Transportieren von Transportgut, beispielsweise von Behältern 2 in einer Transportrichtung T. Er besteht hierfür aus mehreren, jeweils eine geschlossene Schlaufe bildenden und endlos umlaufend angetriebenen Förder- oder Transportbändern 3. Die Transportbänder 3 sind mehrzügig, d.h. quer oder senkrecht zur Transportrichtung T einander benachbart angeordnet, sodass sie zumindest mit einem Teil ihrer jeweils oberen Länge ihrer Schlaufe eine gemeinsame, beispielsweise horizontale Transportfläche in einer Transportebene TE bilden, auf der die Behälter 2 mit ihrem Behälterboden aufstehen. An dem bezogen auf die Transportrichtung T vorderen Ende 1.1 sowie bezogen auf die Transportrichtung T rückwärtigen Ende 1.2 sind die Transportbänder 3, die beispielsweise Transportriemen, Scharnierbandketten oder andere, für den Transport der Behälter 2 geeignete Transportbänder sind, über Umlenkungen 4 geführt. Weitere Umlenkungen 5 sowie Antriebsmotoren 6 für die Transportbänder 3 befinden sich unterhalb der Transportebene TE.

Eine Besonderheit des Transporteurs 1 besteht darin, dass für jedes Transportband 3 ein eigener Antriebsmotor 6 in Form eines Elektromotors, vorzugsweise eines getriebelosen Elektromotors, d.h. in Form eines direkt antreibenden Elektromotors, bevorzugt in Form eines Torquemotors vorgesehen ist. Bei der dargestellten Ausführungsform des Transporteurs 1 mit insgesamt vier Transportbändern 3 sind also vier Antriebsmotoren 6 in Form jeweils eines Elektromotors verwendet, der einen innenliegenden, mit dem Maschinengestell 7 des Transporteurs 1 drehfest verbundenen Stator 8 und einen außenliegenden Rotor 9 aufweist. Letzterer ist bei Verwendung von Transportbändern in Form von Ketten an seiner Umfangsfläche mit einer Kettenverzahnung 10 versehen, die die senkrecht zur Transportrichtung T orientierte Motorachse MA konzentrisch umschließt. Die Antriebsmotoren 6 bilden die Antriebseinheit des Transporteurs 1. Jeder Rotor 9 bildet eine das jeweilige Transportelement 3 antreibende Umlenkung.

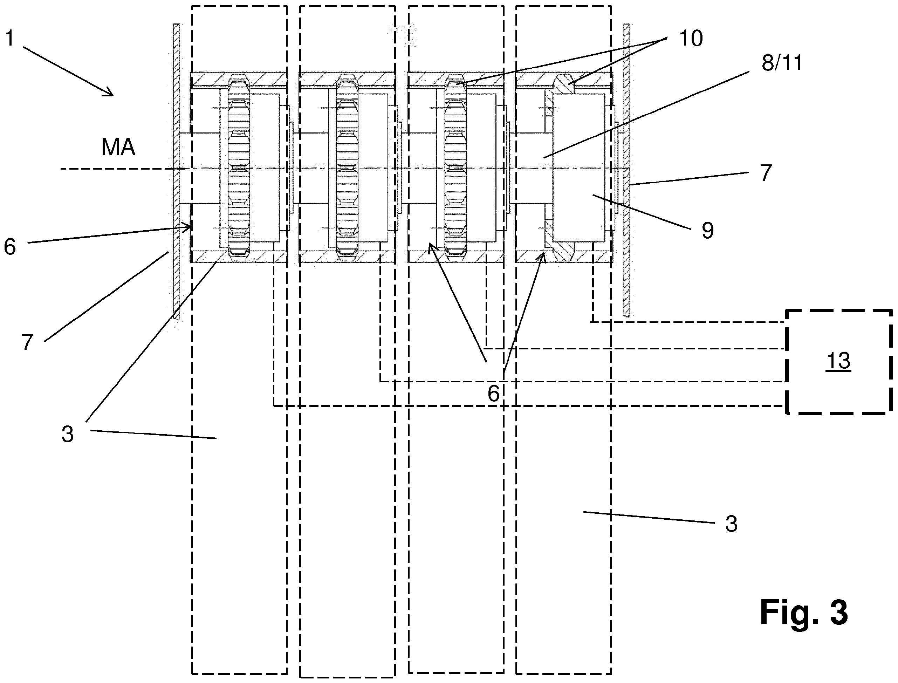

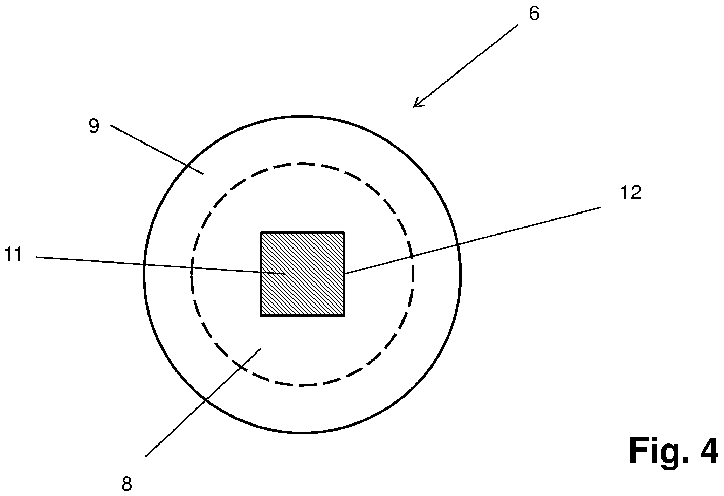

Bei der den Figuren 1 - 4 dargestellten Ausführungsform sind entsprechend der Figur 3 die Statoren 8 sämtlicher Antriebsmotoren 6 auf einem gemeinsamen Träger in Form einer Tragachse 11 angeordnet, die beidendig jeweils am Maschinengestell 7 verdrehungssicher gehalten ist. Der Stator 8 jedes Antriebsmotors 6 ist mit einer Ausnehmung oder Durchbrechung 12 versehen, die einen von der Kreisform abweichenden Querschnitt besitzt, d.h. bei der dargestellten Ausführungsform einen quadratischen Querschnitt, an den der Querschnitt der Tragachse 11 angepasst ist, sodass die Statoren 8 sämtlicher Antriebsmotoren 6 verdrehungssicher an der Tragachse 11 und über diese auch verdrehungssicher am Maschinengestell 7 gehalten sind.

Die Ansteuerung der Antriebsmotoren 6 erfolgt über ein gemeinsames Steuergerät 13, das beispielsweise die Maschinensteuerung oder ein Teil der Maschinensteuerung des Transporteurs 1 oder einer den Transporteur 1 aufweisenden Anlage ist. Mit dem Steuergerät 13 werden die Antriebsmotoren 6 beispielsweise so angesteuert, dass sich die Transportbänder 3 in der Transportrichtung T synchron zu einander und mit derselben Transportgeschwindigkeit, oder aber mit einer definierten unterschiedlichen Transportgeschwindigkeit bewegen, sofern dies erforderlich ist, beispielsweise bei Verwendung des Transporteurs 1 als Teil einer Anlagenkomponente zum Zusammenführen eines angeförderten breiteren Behälterstromes in einem Behälterstrom reduzierter Breite oder umgekehrt zum Auseinanderführen eines angeförderten Behälterstroms reduzierter Breite in einem Behälterstrom größerer Breite.

Grundsätzlich besteht auch die Möglichkeit, für jeden Antriebsmotor 6 ein eigenes, diesen Motor steuerndes Steuergerät vorzusehen, wobei die Steuergeräte dann z.B. eine Art Treiberstufen bilden, die von einer zentralen Steuerung gesteuert werden, die z.B. die Anlagensteuerung oder einen Teil der Anlagensteuerung ist. Weiterhin besteht auch die Möglichkeit, dass bei jedem Antriebsmotor 6 eigenständig zugeordneten Steuergeräten eines dieser Steuergeräte als Master die übrigen Steuergeräte ansteuert und/oder überwacht, sodass der geforderte beispielsweise synchrone Antrieb der Transportbänder 3 erreicht ist.

Wie insbesondere die Figur 2 zeigt, sind die Umlenkungen 5 und der jeweilige Antriebsmotor 6 so angeordnet, dass jedes Transportband 3 den außenliegenden Rotor 9 des zugehörigen Antriebsmotors 6 auf einem für den Antrieb ausreichend großen Winkelbereich, d.h. beispielsweise auf einen Winkelbereich von 180° oder etwa 180° umschließt.

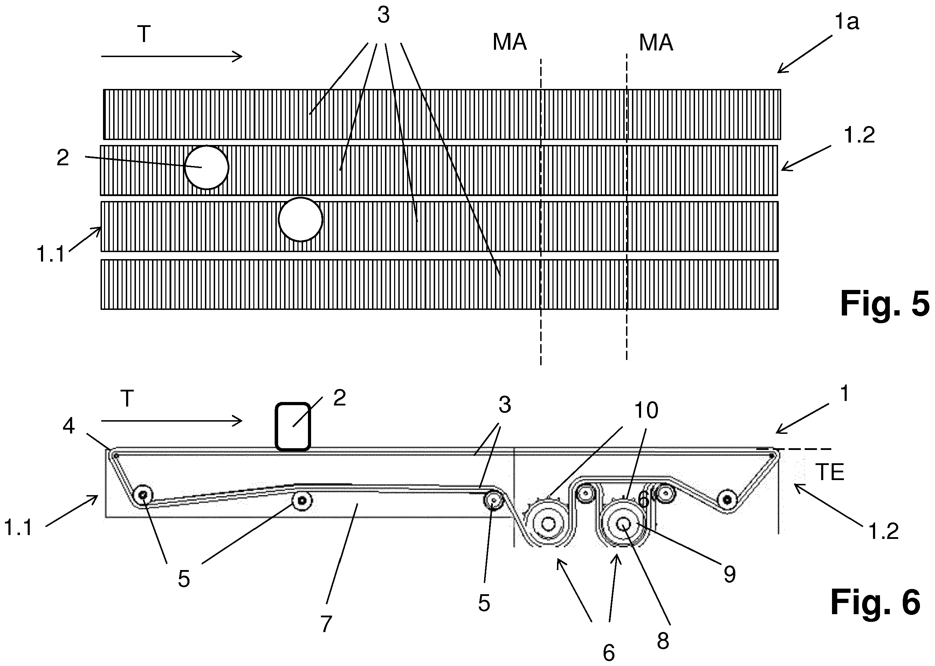

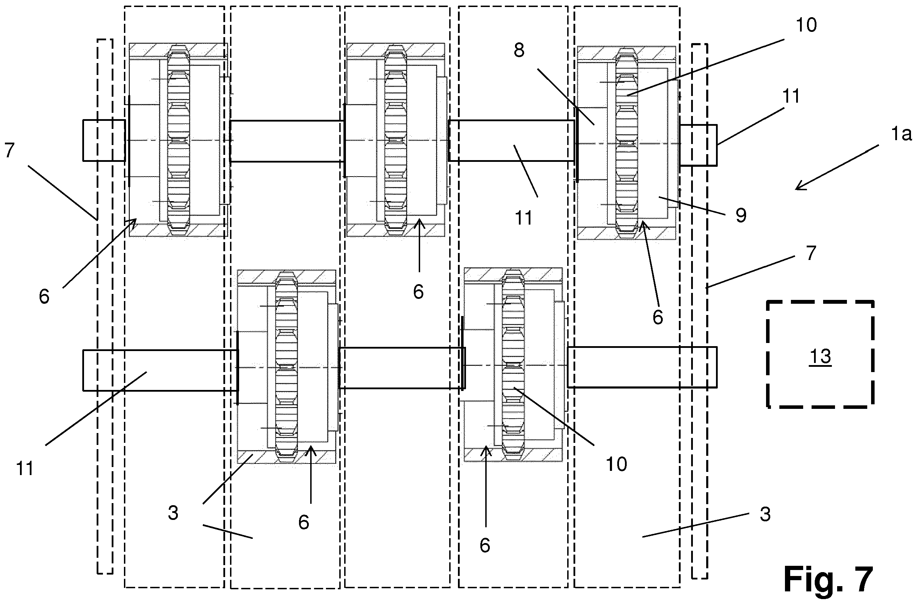

Die Figuren 5 - 7 zeigen in Darstellungen ähnlich den Figuren 1 - 3 als weitere Ausführungsform einen Transporteur 1a, der insgesamt fünf quer zur Transportrichtung T nebeneinander angeordnete Transportbänder 3 aufweist, die wiederum jeweils durch einen eigenen Antriebsmotor 6 umlaufend antreibbar sind, wobei die Antriebsmotoren 6 die Antriebseinheit bilden. Der Transporteur 1a unterscheidet sich von dem Transporteur 1 im Wesentlichen nur dadurch, dass nicht sämtliche Antriebsmotoren 6 mit ihren Motorachsen MA achsgleich angeordnet sind, sondern die Antriebsmotoren 6 mehrere Gruppen bilden, nämlich bei der dargestellten Ausführungsform eine erste Gruppe mit drei Antriebsmotoren 6, und eine zweite Gruppe mit zwei Antriebsmotoren 6, wobei die Antriebsmotoren 6 jeder Gruppe mit ihren Motorachsen MA wiederum achsgleich angeordnet sind, und zwar auf einer Tragachse 11, die den von der Kreisform abweichenden Querschnitt aufweist und durch die an diesen Querschnitt angepasste Durchbrechung 12 der Statoren 8 hindurchreicht. Die beiden Gruppen von Antriebsmotoren 6 und damit auch die beiden Tragachsen 11 sind in Transportrichtung T gegeneinander versetzt.

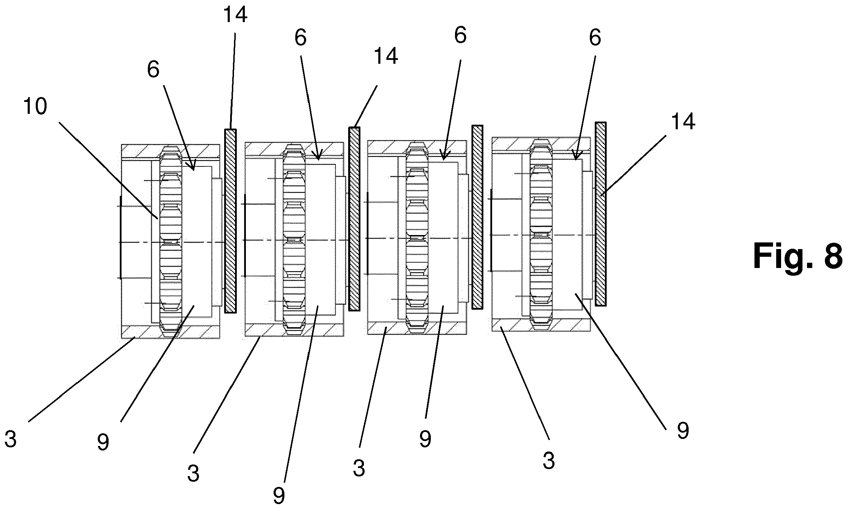

Vorstehend wurde davon ausgegangen, dass die Statoren 8 der Antriebsmotoren 6 jeweils mit der Durchbrechung 12 versehen sind, sodass eine verdrehungssichere Anordnung der Statoren 8 in einfacher Weise auf der Tragachse 12 möglich ist. Die Figur 8 zeigt eine Ausbildung, bei der die Statoren 8 der Antriebsmotoren 6 die Durchbrechung 12 nicht aufweisen und jeder Stator 8 somit seitlich an einer Haltekonstruktion 14 des Maschinengestells 7 verdrehungssicher befestigt ist. Die Verwendung von Antriebsmotoren 6, deren Stator 8 die Durchbrechung 12 nicht aufweisen hat den Vorteil, dass diese Motoren bei gleicher Baugröße mit einem im Vergleich zu Antriebsmotoren mit der Durchbrechung 12 im Stator 8 höheren Drehmoment realisiert werden können.

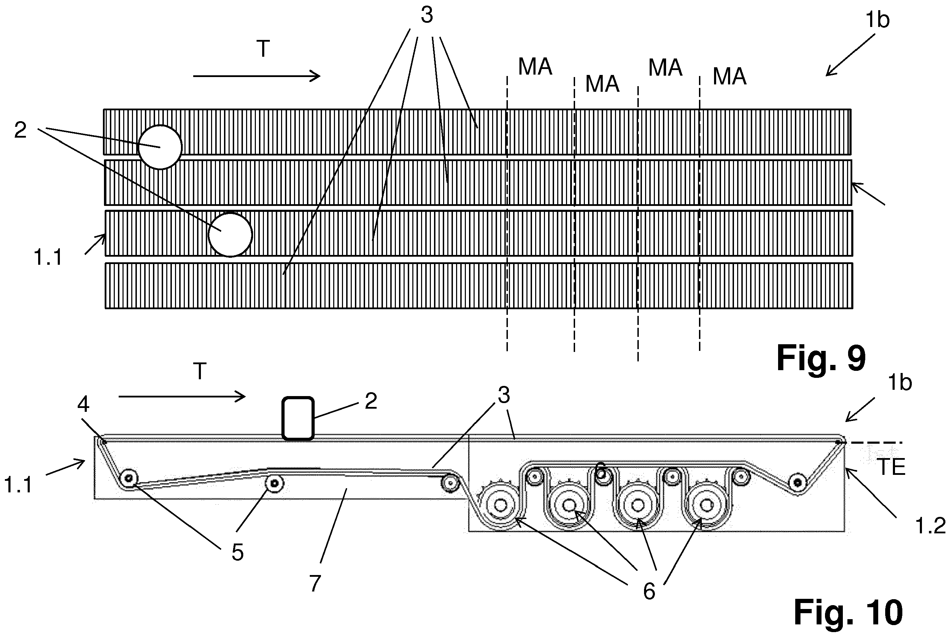

Die Figuren 9 und 10 zeigen als weitere Ausführungsform einen Transporteur 1b, der vier senkrecht zur Transportrichtung T an einander anschließende und einander benachbarte Transportbänder 3 aufweist, denen wiederum jeweils ein eigenständiger Antriebsmotor 6 der Antriebseinheit zugeordnet ist. Die Antriebsmotoren 6 bzw. deren senkrecht zur Transportrichtung T orientierte Motorachse MA sind dabei bezogen auf die Transportrichtung T gegeneinander versetzt. Der Stator 8 jedes Antriebsmotors ist beispielsweise mit seiner Durchbrechung 12 verdrehungssicher auf einer Tragachse 11 gehalten oder aber mit der Haltekonstruktion 14 des Maschinengestells 7 verdrehungssicher verbunden. Grundsätzlich besteht bei dieser Ausführungsform auch die Möglichkeit, dass zumindest ein Teil der Antriebsmotoren 6 mit der Motorachse MA achsgleich mit zumindest einem weiteren Antriebsmotor 6 vorgesehen ist, sodass der Transporteur 1b dann senkrecht zur Transportrichtung T aneinander anschließend tatsächlich mehr als vier Transportbänder 3 aufweist bzw. die in der Figur 9 dargestellten Transportbänder zumindest zum Teil jeweils wenigstens zweifach vorgesehen sind.

Die Anzahl der Transportbänder kann auch unterschiedlich von den beschriebenen Ausführungsbeispielen sein. Weiterhin wurde vorstehend davon ausgegangen, dass die Antriebsmotoren 6 jeweils Außenläufermotoren, d.h. solche mit außenliegendem Rotor 9 sind. Grundsätzlich ist es auch möglich, für den Antrieb der Transportbänder 3 Elektromotoren und dabei wiederum bevorzugt getriebelose Elektromotoren, d.h. direkt antreibende Elektromotoren, vorzugsweise in Form von Torquemotoren zu verwenden, die einen innenliegenden Rotor aufweisen und an dem oder an dessen Rotorwelle dann ein das jeweilige Transportband 3 antreibendes und beispielsweise mit der Verzahnung 10 versehenes Rad vorgesehen ist. Um hierbei das erforderliche dichte Anschließen der Transportbänder 3 in der Achsrichtung senkrecht zur Transportrichtung T zu erreichen, sind die Antriebsmotoren bzw. deren senkrecht zur Transportrichtung T orientierten Motorachsen radial zu diesen Achsen gegeneinander versetzt, z.B. in der Weise, wie dies in der Figur 10 dargestellt ist.

### Bezugszeichenliste

- 1, 1a, 1b: Transporteur
- 1.1, 1.2: Ende des Transporteurs
- 2: Behälter
- 3: Transportband
- 4, 5: Umlenkung
- 6: Antriebsmotor
- 7: Maschinengestell
- 8: Stator
- 9: Rotor
- 10: Verzahnung
- 11: Tragachse
- 12: Durchbruch
- 13: Steuergerät
- 14: Haltekonstruktion
- T: Transportrichtung
- TE: Transportebene
- MA: Motorachse

## Patentansprüche

1. Transporteur zum Transportieren von Behältern (2) in einer Transportrichtung (T), mit wenigstens zwei eine geschlossene Schlaufe bildenden und mit der Antriebseinheit endlos umlaufend antreibbaren Transportelementen (3), die mehrzügig und senkrecht zu der Transportrichtung (T) einander benachbart zur Ausbildung einer gemeinsamen Transportfläche angeordnet sind, auf der die Behälter (2) mit einem Behälterboden aufstehen, wobei die Antriebseinheit für jedes Transportelement (3) einen eigenen elektrischen Antriebsmotor (6) aufweist, und wobei die Antriebsmotoren (6) wenigstens zweier Transportelemente (3) mit ihren senkrecht zur Transportrichtung (T) orientierten Antriebs- oder Motorachsen (MA) achsgleich angeordnet sind, **dadurch gekennzeichnet, dass** die Antriebsmotoren (6) Außenläufermotoren mit einem inneren, drehfest mit dem Maschinengestell (7) verbundenen Stator (8) und mit einem äußeren Rotor (9) sind, der eine das jeweilige Transportelement (3) antreibende Umlenkung bildet, dass deren Statoren (8) über einen gemeinsamen Träger (11) drehfest mit dem Maschinengestell (7) verbunden sind, und dass der gemeinsame Träger (11) in Form einer Tragachse ist.

2. Transporteur nach Anspruch 1, **dadurch gekennzeichnet, dass** die elektrischen Antriebsmotoren (6) Torquemotoren sind.

3. Transporteur nach Anspruch 1 oder 2, **dadurch gekennzeichnet, dass** der jeweilige Rotor (9) Teil eines Motorgehäuses ist.

4. Transporteur nach einem der vorhergehenden Ansprüche, **dadurch gekennzeichnet, dass** mehrere Antriebsmotoren (6) mit ihren senkrecht zur Transportrichtung (T) orientierten Antriebs- oder Motorachsen (MA) radial zu diesen Achsen gegeneinander versetzt vorgesehen sind.

5. Transporteur nach einem der vorhergehenden Ansprüche, **dadurch gekennzeichnet, dass** die Tragachse (11) Öffnungen oder Durchbrechungen (12) in den Statoren (8) der Antriebsmotoren (6) durchgreift und diese Statoren (8) durch Kraft- und/oder Formschluss verdrehungssicher auf der Tragachse (11) gehalten sind.

6. Transporteur nach Anspruch 5, **dadurch gekennzeichnet, dass** die Tragachse (11) zumindest an einer die jeweilige Durchbrechung (12) durchgreifenden Teillänge einen von der Kreisform abweichenden Querschnitt aufweist, an den der Querschnitt der jeweiligen Durchbrechung (12) angepasst ist.

7. Transporteur nach einem der Ansprüche 4 - 6, **dadurch gekennzeichnet, dass** die Antriebsmotoren (6) wenigstens zwei Gruppen bilden, die radial zu den Antriebs- oder Motorachsen (MA) gegeneinander versetzt sind und von denen wenigstens eine Gruppe zumindest zwei Antriebsmotoren (6) aufweist, und dass die Antriebsmotoren (6) dieser Gruppe auf dem gemeinsame Träger (11) angeordnet sind.

8. Transporteur nach einem der vorhergehenden Ansprüche, **dadurch gekennzeichnet, dass** für jeden Antriebsmotor (6) oder für eine Gruppe von wenigstens zwei Antriebsmotoren (6) ein eigenes Steuergerät oder für sämtliche Antriebe (6) ein gemeinsames Steuergerät vorgesehen ist.

9. Transporteur nach einem der vorhergehenden Ansprüche, **dadurch gekennzeichnet, dass** die Antriebsmotoren (6) unterhalb der Transportebene (TE) angeordnet sind.

10. Transporteur nach einem der vorhergehenden Ansprüche, **dadurch gekennzeichnet, dass** die Transportelemente Transportbänder, Transportriemen oder Transportketten, beispielsweise Scharnierbandketten sind.

## Claims

1. Conveyor for the transporting of containers (2) in a transport direction (T), with at least two transport elements (3) which form a closed loop and can be driven by the drive unit such as to circulate endlessly, and which are arranged such as to be multi-lane and adjacent to one another perpendicular to the transport direction (T) in order to form a common transport surface, on which the containers (2) stand upright with their container bases, wherein the drive unit for each transport element (3) comprises a dedicated electric drive motor (6), and wherein the drive motors (6) of at least two transport elements (3) are arranged coaxially with their drive axles or motor axles (MA) oriented perpendicular to the transport direction (T), **characterised in that** the drive motors (6) are external-rotor motors, with an internal stator (8) connected secured against rotation to the machine frame (7) and with an external rotor (9), which forms a deflection element driving the respective transport element (3), that their stators (8) are connected secured against rotation to the machine frame (7) by means of a common carrier (11), and that the common carrier (11) is in the form of a carrier axle.

2. Conveyor according to claim 1, **characterised in that** the electric drive motors (6) are torque motors.

3. Conveyor according to claim 1 or 2, **characterised in that** the respective rotor (9) is part of a motor housing.

4. Conveyor according to any one of the preceding claims, **characterised in that** a plurality of drive motors (6) are provided, with their drive axles or motor axles (MA) oriented perpendicular to the transport direction (T), offset against one another radially to these axles.

5. Conveyor according to any one of the preceding claims, **characterised in that** the carrier axle (11) engages through openings or passage apertures (12) in the stators (8) of the drive motors (6), and these stators (8) are held in non-positive or positive fit secured against rotation on the carrier axle (11).

6. Conveyor according to claim 5, **characterised in that** the carrier axle (11) exhibits, on a part length which engages through the respective passage aperture (12), a cross-section which deviates from the circular shape, to which the cross-section of the respective passage aperture (12) is matched.

7. Conveyor according to any one of the claims 4-6, **characterised in that** the drive motors (6) form at least two groups, which are offset against one another radially to the drive axles or motor axles (MA), and of which at least one group comprises at least two drive motors (6), and that the drive motors (6) of this group are arranged on the common carrier (11).

8. Conveyor according to any one of the preceding claims, **characterised in that** for each drive motor (6) or for a group of at least two drive motors (6) an individual dedicated control device is provided, or a common control device for all the drives (6).

9. Conveyor according to any one of the preceding claims, **characterised in that** the drive motors (6) are arranged beneath the transport plane (TE).

10. Conveyor according to any one of the preceding claims, **characterised in that** the transport elements are transport bands, transport belts or transport chains, such as, for example, hinged band chains.

## Revendications

1. Transporteur pour le transport de récipients (2) dans un sens de transport (T), avec au moins deux éléments de transport (3) formant une boucle fermée et entraînables en rotation sans fin avec l'unité d'entraînement qui sont agencés de manière multiple et perpendiculairement au sens de transport (T) de manière adjacente les uns aux autres pour la réalisation d'une surface de transport commune, sur laquelle sont placés les récipients (2) avec un fond de récipient, dans lequel l'unité d'entraînement présente pour chaque élément de transport (3) un propre moteur d'entraînement (6) électrique, et dans lequel les moteurs d'entraînement (6) d'au moins deux éléments de transport (3) sont agencés avec leurs axes d'entraînement ou de moteur (MA) orientés perpendiculairement au sens de transport (T) sur le même axe, **caractérisé en ce que** les moteurs d'entraînement (6) sont des moteurs à rotor extérieur avec un stator (8) intérieur raccordé solidaire en rotation au bâti de machine (7) et avec un rotor (9) extérieur qui forme une déviation entraînant l'élément de transport (3) respectif, que leurs stators (8) sont raccordés solidaires en rotation au bâti de machine (7) par le biais d'un support commun (11), et que le support commun (11) se présente sous la forme d'un axe porteur.

2. Transporteur selon la revendication 1, **caractérisé en ce que** les moteurs d'entraînement (6) électriques sont des moteurs couples.

3. Transporteur selon la revendication 1 ou 2, **caractérisé en ce que** le rotor (9) respectif fait partie d'un boîtier de moteur.

4. Transporteur selon l'une quelconque des revendications précédentes, **caractérisé en ce que** plusieurs moteurs d'entraînement (6) sont prévus en déport radialement par rapport à ces axes les uns contre les autres avec leurs axes d'entraînement ou de moteur (MA) orientés perpendiculairement au sens de transport (T).

5. Transporteur selon l'une quelconque des revendications précédentes, **caractérisé en ce que** l'axe porteur (11) traverse des ouvertures ou des percements (12) dans les stators (8) des moteurs d'entraînement (6) et ces stators (8) sont maintenus par liaison à force et/ou à complémentarité de formes sans pouvoir tourner sur l'axe porteur (11).

6. Transporteur selon la revendication 5, **caractérisé en ce que** l'axe porteur (11) présente, au moins sur une longueur partielle traversant le percement (12) respectif, une section transversale divergeant de la forme circulaire, à laquelle la section transversale du percement (12) respectif est adaptée.

7. Transporteur selon l'une quelconque des revendications 4 à 6, **caractérisé en ce que** les moteurs d'entraînement (6) forment au moins deux groupes qui sont en déport radialement par rapport aux axes d'entraînement ou de moteur (MA) l'un contre l'autre et dont au moins un groupe présente au moins deux moteurs d'entraînement (6), et que les moteurs d'entraînement (6) de ce groupe sont agencés sur le support commun (11).

8. Transporteur selon l'une quelconque des revendications précédentes, **caractérisé en ce que** pour chaque moteur d'entraînement (6) ou pour un groupe d'au moins deux moteurs d'entraînement (6) un appareil de commande propre ou pour tous les entraînements (6) un appareil de commande commun est prévu.

9. Transporteur selon l'une quelconque des revendications précédentes, **caractérisé en ce que** les moteurs d'entraînement (6) sont agencés sous le plan de transport (TE).

10. Transporteur selon l'une quelconque des revendications précédentes, **caractérisé en ce que** les éléments de transport sont des bandes de transport, courroies de transport ou chaînes de transport, par exemple des chaînes plates à charnière.
